# EUROPEAN PATENT APPLICATION

(11) **EP 4 822 428 A1**
(43) Date of publication of application: **14.10.2026**
(21) Application number: 25741450.8
(22) Date of filing: 13.01.2025
(51) Int. Cl.: G02C 7/02

(54) **GLASSES, LENS AND PROCESSING METHOD THEREFOR**

(30) Priority: 19.01.2024 CN 202410080459
(71) Applicant: Mingyue Optical Lens Co., Ltd., Zhenjiang, Jiangsu 212300 (CN)
(72) Inventor: XIE, Gongxing, Zhenjiang, Jiangsu 212300 (CN); ZHU, Haifeng, Zhenjiang, Jiangsu 212300 (CN); XIANG, Huazhong, Zhenjiang, Jiangsu 212300 (CN); MA, Lefei, Zhenjiang, Jiangsu 212300 (CN); ZHANG, Dawei, Zhenjiang, Jiangsu 212300 (CN); ZHUANG, Songlin, Zhenjiang, Jiangsu 212300 (CN)
(74) Representative: Icosa
(86) International application number: PCT/CN2025/072003
(87) International publication number: WO 2025/152888

(57) **Abstract**

Glasses, a lens and a processing method therefor, relating to the technical field of lenses. The lens comprises a fixed-focus zone, a first variable-focus zone and a second variable-focus zone. The shape of the fixed-focus zone is circular, and the variation in focal power within the fixed-focus zone is zero. One of the straight lines coinciding with the circle center of the fixed-focus zone is a reference line, and the first variable-focus zone and the second variable-focus zone are arranged in the direction of the reference line. The first variable-focus zone is located at the side of the fixed-focus zone facing away from the second variable-focus zone in the radial direction of the fixed-focus zone. The position of the intersection point between an isofocal line in the first variable-focus zone and the reference line is a first position, the distance between the first position and the circle center of the fixed-focus zone is a target distance, the position corresponding to the point that is at the target distance from the circle center of the fixed-focus zone and coincides with both the second variable-focus zone and the reference line is a second position, and the absolute value of the difference between the variation in focal power of the isofocal line corresponding to the first position and the variation in focal power of the isofocal line corresponding to the second position is greater than zero. The compatibility between the lens and the biological characteristics of human eyes can be improved.

## Description

### CROSS-REFERENCE TO RELATED APPLICATION

This application claims priority to Chinese patent application No. 202410080459.0, filed on January 19, 2024. The entire contents of this Chinese patent application are incorporated herein by reference.

### TECHNICAL FIELD

The present application relates to the technical field of a lens, and in particular to glasses, a lens, and a method for machining the lens.

### BACKGROUND

A variable-power curved surface of a lens is a free-form curved surface that has a stable diopter in a geometric center of the lens and can produce a blurred power change effect around a central fixed power zone, and the power change effect can be changed smoothly from center to edge. Therefore, this effect can be achieved with only one curved surface, by which a vision with central clarity and peripheral blur can be provided, there are no splicing traces in the curved surface, and a beautiful appearance is achieved.

The free-form curved surface which can realize the focal power change effect is a kind of complex optical curved surface, and its research involves the knowledge of optics, ergonomics and mathematics. In the related art, the free-form curved surface capable of realizing a focal power change function and applied to an eyeglass lens is different from the actual situation of a human eye.

### SUMMARY

In view of this, embodiments of the present application provide glasses, a lens, and a method for machining the lens, aiming to make the lens more consistent with biological characteristics of a human eye.

In order to achieve the above object, technical solutions of embodiments of the present application are realized as follows.

Embodiments of the present application provide a lens. The lens includes a fixed power zone, a first variable power zone and a second variable power zone. The fixed power zone is circular, an amount of power change of the fixed power zone is zero, a straight line coinciding with a center of the fixed power zone is provided as a reference line, the first variable power zone and the second variable power zone are arranged along a direction in which the reference line is located, the first variable power zone is located on a side of the fixed power zone away from the second variable power zone along a radial direction of the fixed power zone, an intersection point of an iso-power line in the first variable power zone and the reference line is provided as a first position, a distance between the first position and the center of the fixed power zone is provided as a target distance. The target distance is further defined by a distance between the center of the fixed power zone and a second position corresponding to a point coinciding with both the second variable power zone and the reference line. An absolute value of a difference between an amount of power change at the iso-power line corresponding to the first position and an amount of power change at an iso-power line corresponding to the second position is greater than zero.

In one embodiment, the first variable power zone is located on a side of the fixed power zone close to a temporal portion, the second variable power zone is located on a side of the fixed power zone close to a nasal portion, and an amount of power change at the second position is greater than an amount of power change at the first position.

In one embodiment, the iso-power line in the first variable power zone is a circular arc line and an iso-power line in the second variable power zone is also a circular arc line.

In one embodiment, an intersection point of the reference line and a side of the first variable power zone away from the fixed power zone is provided as a first target point, a center of circle of the iso-power line in the first variable power zone coincides with the first target point, an intersection point of the reference line and a side of the second variable power zone away from the fixed power zone is provided as a second target point, and a center of circle of the iso-power line in the second variable power zone coincides with the second target point.

In one embodiment, the lens includes a third variable power zone surrounding an outer side of the fixed power zone, and located between the first variable power zone and the second variable power zone along the direction in which the reference line is located. The third variable power zone includes a plurality of first sub-zones, a plurality of second sub-zones and a plurality of third sub-zones. The first sub-zones are distributed in a rectangular array, every two adjacent first sub-zones of the first sub-zones are arranged at intervals, and an amount of power change in each of the first sub-zones is a constant value. Each of the second sub-zones is adjacent to corresponding two first sub-zones of the first sub-zones respectively, and each of the second sub-zones has an amount of power change greater than a smaller amount of power change among amounts of power change of the corresponding two first sub-zones, and less than a larger amount of power change among the amounts of power change of the corresponding two first sub-zones. Each of the third sub-zones is adjacent to corresponding four first sub-zones of the first sub-zones respectively, and each of the third sub-zones has an amount of power change greater than the smallest amount of power change among amounts of power change of the corresponding four first sub-zones, and less than the largest amount of power change among the amounts of power change the corresponding four first sub-zones.

In one embodiment, the amount of power change of each of the second sub-zones is a weighted average value of the amounts of power change of the corresponding two first sub-zones.

In one embodiment, the amount of power change of each of the third sub-zones is a weighted average value of the amounts of power change of the corresponding four first sub-zones.

In one embodiment, a circle located in the third variable power zone and having a center coinciding with the center of the fixed power zone is an iso-power circle, and the first sub-zones on the iso-power circle have amounts of power change that are equal.

In another aspect, embodiments of the present application provide a method for machining a lens, including the following operations.

Amounts of power change of the lens are determined according to a diopter distribution map of a human eye fundus, in which an absolute value of a difference between an amount of power change at an iso-power line corresponding to a first position of the lens and an amount of power change at an iso-power line corresponding to a second position of the lens is greater than zero.

A sagittal height matrix of the lens according to the amounts of power change of the lens is obtained.

The lens is machined according to the sagittal height matrix into a shape corresponding to the sagittal height matrix.

In one embodiment, the lens includes a third variable power zone, the third variable power zone having a plurality of non-overlap zones, the plurality of non-overlap zones having amounts of power change that are constant.

The operation that amounts of power change of the lens are determined according to a diopter distribution map of a human eye fundus, in which an absolute value of a difference between an amount of power change at an iso-power line corresponding to a first position of the lens and an amount of power change at an iso-power line corresponding to a second position of the lens is greater than zero, includes the following operations.

The non-overlap zones are arranged in a rectangular array in a manner of overlapping each other, to obtain a two-overlap zone formed by overlapping two non-overlap zones of the non-overlap zones and a four-overlap zone formed by overlapping four non-overlap zones of the non-overlap zones.

An amount of power change of the two-overlap zone is interpolated to a weighted average value of amounts of power change of corresponding two non-overlap zones of the non-overlap zones.

An amount of power change of the four-overlap zone is interpolated to a weighted average value of amounts of power change of corresponding four non-overlap zones of the non-overlap zones.

In a third aspect, embodiments of the present application provide glasses including: lenses according to any one of the above embodiments; and a frame in which the lenses are embedded.

In the lens provided by the embodiments of the present application, an absolute value of a difference between an amount of power change at the iso-power line corresponding to the first position and an amount of power change at an iso-power line corresponding to the second position is greater than zero, so that the amount of power change at any iso-power line in the first variable power zone is different from the amount of power change at a corresponding iso-power line in the second variable power zone, thereby realizing an asymmetric arrangement of the amounts of power change of the first variable power zone and the second variable power zone, which can improve the matching degree between the lens and biological characteristics of the human eye.

### BRIEF DESCRIPTION OF THE DRAWINGS

FIG. 1 is a schematic diagram of zones of a lens according to an embodiment of the present application;
FIG. 2 is a schematic diagram of filling first sub-zones, second sub-zones, and third sub-zones of a third variable power zone of a lens according to an embodiment of the present application;
FIG. 3 is a schematic diagram of the effect of power change of a lens according to an embodiment of the present application;
FIG. 4 is a schematic diagram of the effect of correcting myopia with a lens in the related art;
FIG. 5 is a schematic diagram of nine first sub-zones arranged in a rectangular array according to an embodiment of the present application; and
FIG. 6 is a schematic flowchart of a machining method according to an embodiment of the present application.

Description of reference numerals
1. lens; 1a. iso-power line; 11. fixed power zone; 12. first variable power zone; 13. second variable power zone; 14. third variable power zone; 14a. first sub-zone; 14b. second sub-zone; 14c. third sub-zone; 15. transition zone.

### DETAILED DESCRIPTION

Hereinafter, embodiments of the technical solution of the present application will be described in detail with reference to the accompanying drawings. The following embodiments are merely used to explain the technical solution of the present application more clearly, and are therefore merely examples, and cannot be used to limit the scope of protection of the present application.

Unless otherwise defined, all technical and scientific terms used herein have the same meaning as commonly understood by those skilled in the art to which this application belongs. The terminology used herein is for the purpose of describing specific embodiments only and is not intended to limit the application. The terms "include" and "have" and any variations thereof in embodiments of the present application are intended to cover a non-exclusive inclusion.

In the description of the embodiments of the present application, the technical terms "first", "second", "third" and the like are only used to distinguish different objects, and should not be understood as indicating or implying relative importance or implicitly indicating the number, specific order, or primary-secondary relationship of the indicated technical features. In the description of the embodiments of the present application, "plurality" means two or more, unless otherwise clearly and specifically limited.

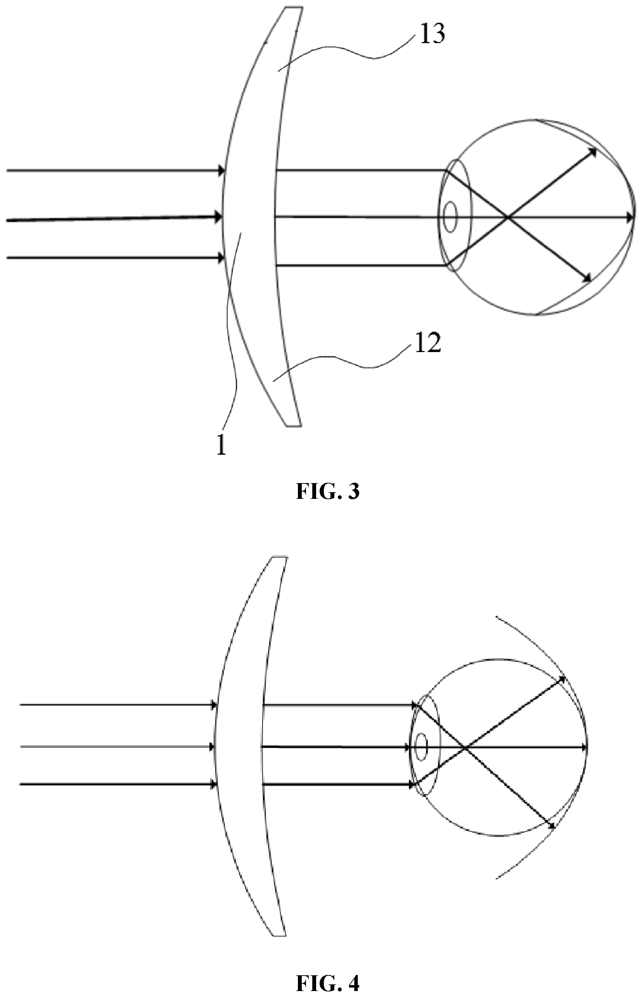

In the related art, please refer to FIG. 4, the research and use of the free-form surface capable of realizing the power change function and applied to the lens use symmetrical designs, and an amount of power change on a nasal side of the lens and an amount of power change on a temporal side of the lens are designed to be symmetrically arranged, which is different from the actual situation that diopters of the human eye on the nasal side and the temporal side are asymmetrical. According to a diopter distribution map of the human eye fundus, the required magnitude of power change for the temporal side of the human eye is greater than that for the nasal side of the human eye. Therefore, different power change effects should be produced on the nasal and temporal sides of the lens.

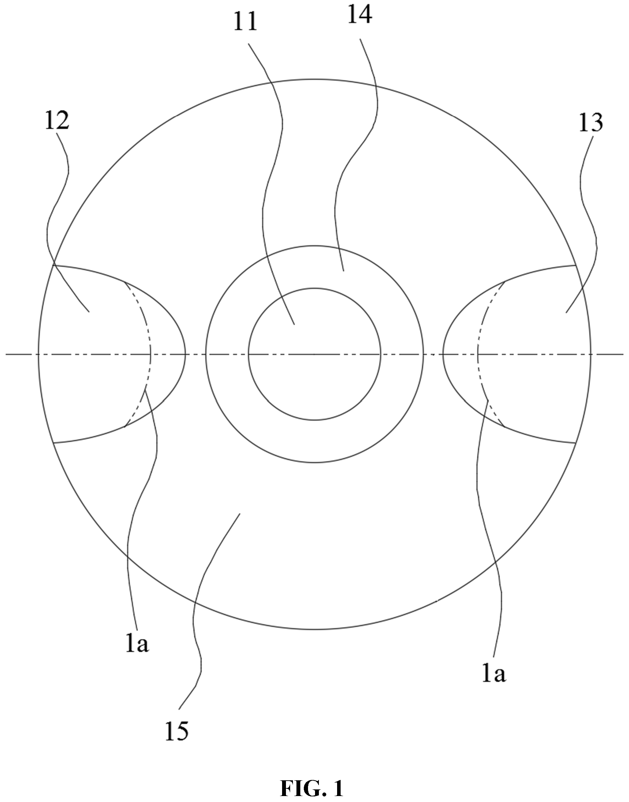

In view of this, embodiments of the present application provide a lens 1. Please refer to FIG. 1. The lens 1 has a fixed power zone 11, a first variable power zone 12 and a second variable power zone 13. The fixed power zone 11 is circular, an amount of power change of the fixed power zone 11 is zero, a straight line coinciding with a center of the fixed power zone 11 is provided as a reference line, the first variable power zone 12 and the second variable power zone 13 are arranged along a direction in which the reference line is located, the first variable power zone 12 is located on a side of the fixed power zone 11 away from the second variable power zone 13 along a radial direction of the fixed power zone 11, a position corresponding to an intersection point of an iso-power line 1a in the first variable power zone 12 with the reference line is provided as a first position, a distance between the first position and the center of the fixed power zone 11 is provided as a target distance. The target distance is further defined by a distance between the center of the fixed power zone 11 and a second position corresponding to a point coinciding with both the second variable power zone 13 and the reference line. An absolute value of a difference between an amount of power change at the iso-power line 1a corresponding to the first position and an amount at power change of the iso-power line 1a corresponding to the second position is greater than zero.

It is noted that the iso-power line 1a is a line composed of points having equal amounts of power change, and the amounts of power change of any points on the iso-power line 1a are equal.

Exemplarily, the iso-power line 1a is a circular arc curve, and the circular arc curves composed of points having equal amounts of power change are distributed in the first variable power zone 12 and the second variable power zone 13, respectively.

It is to be understood that the shape of the iso-power line 1a is not limited in the embodiment of the present application. Exemplarily, the iso-power line 1a may be a circular arc curve or an elliptical arc curve.

In an embodiment of the present application, an absolute value of a difference between the amount of power change at the iso-power line 1a corresponding to the first position and the amount of power change at the iso-power line 1a corresponding to the second position is greater than zero, so that the amount of power change at any iso-power line 1a in the first variable power zone 12 is different from the amount of power change at the corresponding iso-power line 1a in the second variable power zone 13, thereby realizing an asymmetric arrangement of the amounts of power change of the first variable power zone 12 and the second variable power zone 13, which can improve the matching degree between the lens 1 and biological characteristics of the human eye, and thus the lens 1 can effectively produce a power change effect more complying with the human eye in front of the human retina.

In an embodiment, referring to FIGS. 1 and 3, the first variable power zone 12 is located on a side of the fixed power zone 11 close to a temporal portion, the second variable power zone 13 is located on a side of the fixed power zone 11 close to a nasal portion, and an amount of power change at the second position is greater than an amount of power change at the first position.

It should be noted that the nasal portion is a side of the human eye close to the nose, and the temporal portion is a side of the human eye close to the temporal bone. Due to the refractive action of the lens 1, incident light of the temporal portion of the human eye comes from a side of the lens 1 close to the nasal portion, i.e. the second variable power zone 13; incident light of the nasal portion of the human eye comes from a side of the lens 1 close to the temporal portion, i.e., the first variable power zone 12. Further, since the amount of power change required by the human eye at the temporal portion is greater than the amount of power change required by the human eye at the nasal portion, an amount of power change required by a side of the lens 1 close to the nasal portion is greater than an amount of power change required by a side of the lens 1 close to the temporal portion, that is, the amount of power change at the second position in the second variable power zone 13 is greater than the amount of power change at the first position in the first variable power zone 12.

In an embodiment of the present application, the amount of power change at the second position is greater than the amount of power change at the first position, so that the lens 1 can meet the demand that the amount of power change required by the temporal portion of the human eye is greater than the amount of power change required by the nasal portion of the human eye, which can improve the matching degree between the lens 1 and biological characteristics of the human eye, so that the lens 1 can effectively produce a focal power change effect more complying with the human eye in front of the human retina.

Exemplarily, referring to FIG. 3, the lens 1 according to an embodiment of the present application is placed at a certain distance in front of the human eye, and reflected light of an object sequentially passes through the cornea, the anterior chamber, and the crystalline lens of the human eyeball through the lens 1, and will be finally imaged on the retina, and a good focal power change effect is produced on the nasal side and the temporal side of the human eye.

In one embodiment, referring to FIG. 1, the iso-power line 1a in the first variable power zone 12 is a circular arc line, and an iso-power line 1a in the second variable power zone 13 is also a circular arc line.

In the embodiment of the present application, the iso-power lines 1a in the first variable power zone 12 and the second variable power zone 13 are both circular arc lines, and circular arc curves composed of points having equal amounts of power change are respectively distributed in the first variable power zone 12 and the second variable power zone 13, so that the lens 1 can meet the change rule of the amount of power change required by the human eye, and is beneficial to improving the matching degree between the lens 1 and biological characteristics of the human eye.

In one embodiment, please refer to FIG. 1, an intersection point of the reference line and a side of the first variable power zone 12 away from the fixed power zone 11 is provided as a first target point, a center of circle of the iso-power line 1a in the first variable power zone 12 coincides with the first target point, an intersection point of the reference line and a side of the second variable power zone 13 away from the fixed power zone 11 is provided as a second target point, and a center of circle of the iso-power line 1a in the second variable power zone 13 coincides with the second target point.

In the embodiment of the present application, the center of circle of any iso-power line 1a in the first variable power zone 12 coincides with the first target point, and the center of circle of any iso-power line 1a in the second variable power zone 13 also coincides with the second target point, so that the amount of power change in the first variable power zone 12 and the amount of power change in the second variable power zone 13 can be both changed with the change of the radius of the iso-power line 1a, thereby making the lens 1 further meet the change rule of the amount of power change required by the human eye, which can improve the matching degree between the lens 1 and biological characteristics of the human eye.

In one embodiment, the amount of power change of the first variable power zone 12 can be expressed by the following formula:
${F}_{1} = DFADDN \times sin \left(π\times {d}_{1}/\left({L}_{1}-r\right)\right) ;$
Where:
*F*₁ is the amount of power change of the first variable power zone 12;
*DFADDN* is the maximum amount of power change of the first variable power zone 12;
*d*₁ is a distance between the first position in the first variable power zone 12 and the center of the fixed power zone 11 minus a radius of the fixed power zone 11;
*r* is the radius of the fixed power zone 11;
Li is a distance between a first reference point located on the reference line in the first variable power zone 12 and the center of the fixed power zone 11.

In the embodiment of the present application, the formula of the amount of power change of the first variable power zone 12 is a sin function change curve, which can make the change of the amounts of power change of the first variable power zone 12 smoother.

In one embodiment, the amount of power change of the first variable power zone 12 may additionally be expressed by the following formula:
${F}_{1} = DFADDN / \left(1+{e}^{AN \times \left(-\left(\left(-{d}_{1}\right)-r-{b}_{1}\right)\right)}\right) ;$
Where:
*F*₁ is the amount of power change of the first variable power zone 12;
*DFADDN* is the maximum amount of power change of the first variable power zone 12;
*d*₁ is a distance between the first position in the first variable power zone 12 and the center of the fixed power zone 11 minus a radius of the fixed power zone 11;
*r* is the radius of the fixed power zone 11;
*AN is* a curve control coefficient of the first variable power zone 12;
*b*₁ is a curve translation constant of the first variable power zone 12.

In the embodiment of the present application, the formula of the amount of power change of the first variable power zone 12 is a sigmoid function change curve, which can improve the stability of the amount of power change of the first variable power zone 12.

In one embodiment, the amount of power change of the second variable power zone 13 may be expressed by the following formula:
${F}_{2} = DFADDT \times sin \left(π\times {d}_{2}/\left({L}_{2}-r\right)\right) ;$
Where:
*F*₂ is the amount of power change of the second variable power zone 13;
*DFADDT* is the maximum amount of power change of the second variable power zone 13;
*d*₂ is a distance between the second position in the second variable power zone 13 and the center of the fixed power zone 11 minus a radius of the fixed power zone 11;
*r* is the radius of the fixed power zone 11;
*L*₂ is a distance between a second reference point located on the reference line in the second variable power zone 13 and the center of the fixed power zone 11.

In the embodiment of the present application, the formula of the amount of power change of the second variable power zone 13 is a sin function change curve, which can make the change of the amounts of power change of the second variable power zone 13 smoother.

In one embodiment, the amount of power change of the second variable power zone 13 may additionally be expressed by the following formula:
${F}_{2} = DFADDT / \left(1+{e}^{AT \times \left(-\left(\left(-{d}_{2}\right)-r-{b}_{2}\right)\right)}\right) ;$
Where:
*F*₂ is the amount of power change of the second variable power zone 13;
*DFADDT* is the maximum amount of power change of the second variable power zone 13;
*d*₂ is a distance between the second position in the second variable power zone 13 and the center of the fixed power zone 11 minus a radius of the fixed power zone 11;
*r* is the radius of the fixed power zone 11;
*AT* is a curve control coefficient of the second variable power zone 13;
*b*₂ is a curve translation constant of the second variable power zone 13.

In the embodiment of the present application, the formula of the amount of power change of the second variable power zone 13 is a sigmoid function change curve, which can improve the stability of the amount of power change of the second variable power zone 13.

In one embodiment, referring to FIGS. 1, 2 and 5, the lens 1 has a third variable power zone 14 surrounding an outer side of the fixed power zone 11, the third variable power zone 14 is located between the first variable power zone 12 and the second variable power zone 13 along the direction in which the reference line is located. The third variable power zone 14 may include a plurality of first sub-zones 14a, a plurality of second sub-zones 14b and a plurality of third sub-zones 14c. The first sub-zones 14a are distributed in a rectangular array. Every two adjacent first sub-zones 14a of the plurality of first sub-zones are arranged at intervals. An amount of power change in each first sub-zone 14a is a constant value. Each second sub-zone 14b is adjacent to corresponding two first sub-zones 14a of the first sub-zones respectively. Each second sub-zone 14b has an amount of power change greater than a smaller one among amounts of power change of the corresponding two first sub-zones 14a and less than a larger one of the amounts of power change of the corresponding two first sub-zones 14a. Each third sub-zone 14c is adjacent to corresponding four first sub-zones 14a of the first sub-zones respectively, and each third sub-zone 14c has an amount of power change greater than the smallest amount of power change among amounts of power change of the corresponding four first sub-zones 14a and less than the largest amount of power change among the amounts of power change of the corresponding four first sub-zones 14a.

It is noted that since a zoom ring appears in the visual center of the human eye according to the diopter distribution map of the human eye fundus, a third variable power zone 14 surrounding the outer side of the fixed power zone 11 is required in the lens 1 so that the amount of power change of the third variable power zone 14 matches the diopter power distribution of the human eye fundus.

In the embodiment of the present application, the third variable power zone 14 surrounds an outer side of the fixed power zone 11, and the third variable power zone 14 is divided into a plurality of first sub-zones 14a, a plurality of second sub-zones 14b, and a plurality of third sub-zones 14c, the magnitude of the amount of power change of each second sub-zone 14b is comprised between the magnitudes of the amounts of power change the corresponding two first sub-zones 14a, and the magnitude of the amount of power change of each third sub-zone 14c is comprised between the magnitudes of the amounts of power change of the corresponding four first sub-zones 14a, so that the amounts of power change in the third variable power zone 14 change uniformly and smoothly, thereby enabling the lens 1 to effectively produce a focal power change effect more consistent with the human eye in front of the human retina.

In one embodiment, referring to FIGS. 1, 2, and 5, the amount of power change of each second sub-zone 14b is a weighted average value of the amounts of power change of the corresponding two first sub-zones 14a.

Exemplarily, the amount of power change of the second sub-zone 14b can be expressed by the following formulas: $P \left(i,j-1\right) = \left({θ}_{1}P\left(i, j\right)+{θ}_{2}P\left(i,j-2\right)\right) ;$
$P \left(i,j+1\right) = \left({θ}_{1}P\left(i, j\right)+{θ}_{2}P\left(i,j+2\right)\right) ;$ $P \left(i-1,j\right) = \left({θ}_{1}P\left(i, j\right)+{θ}_{2}P\left(i-2,j\right)\right) ;$ $P \left(i+1,j\right) = \left({θ}_{1}P\left(i, j\right)+{θ}_{2}P\left(i+2,j\right)\right) ;$
Where:
*P(i, j-1), P(i, j+1), P(i-1, j),* and *P(i+1, j)* are amounts of power change of the second sub-zones 14b;
*P(i, j), P(i, j-2), P(i, j+2), P(i-2, j),* and *P(i+2, j)* are the amounts of power change of the corresponding first sub-zones 14a, respectively;
*θ*₁ and *θ*₂ are weights of the corresponding two first sub-zones 14a, respectively, herein *θ*₁ + *θ*₂=1 and *θ*₁= *θ*₂ are satisfied.

In the embodiment of the present application, the amount of power change of each second sub-zone 14b is the weighted average value of the amounts of power change of the corresponding two first sub-zones 14a, so that the amount of power change of the second sub-zone 14b is less than a larger one of the amounts of power change of the corresponding two first sub-zones 14a, and greater than a smaller one of the amounts of power change of the corresponding two first sub-zones 14a. As such, the amounts of power change in the third variable power zone 14 can be changed uniformly and smoothly from the first sub-zone 14a to the second sub-zone 14b, so that the lens 1 can effectively produce a focal power change effect more complying with the human eye in front of the human retina.

In one embodiment, referring to FIGS. 1, 2, and 5, the amount of power change of each third sub-zone 14c is a weighted average value of the amounts of power change of the corresponding four first sub-zones 14a.

Exemplarily, the amount of power change of the third sub-zone 14c can be expressed by the following formulas: $P \left(i-1,j-1\right) = \left({θ}_{1}P\left(i, j\right)+{θ}_{2}P\left(i-2,j-2\right)+{θ}_{3}P\left(i-2,j\right)+{θ}_{4}P\left(i,j-2\right)\right) ;$
$P \left(i-1,j+1\right) = \left({θ}_{1}P\left(i, j\right)+{θ}_{2}P\left(i-2,j\right)+{θ}_{3}P\left(i,j+2\right)+{θ}_{4}P\left(i-2,j+2\right)\right) ;$ $P \left(i+1,j-1\right) = \left({θ}_{1}P\left(i, j\right)+{θ}_{2}P\left(i+2,j\right)+{θ}_{3}P\left(i,j-2\right)+{θ}_{4}P\left(i+2,j-2\right)\right) ;$ $P \left(i+1,j+1\right) = \left({θ}_{1}P\left(i, j\right)+{θ}_{2}P\left(i+2,j+2\right)+{θ}_{3}P\left(i+2,j\right)+{θ}_{4}P\left(i,j+2\right)\right) ;$
Where:
*P(i-1, j-1), P(i-1, j+1), P(i+1, j-1),* and *P(i+1, j+1)* are amounts of power change of the third sub-zones 14c;
*P(i, j), P(i-2, j-2), P(i-2, j), P(i, j-2), P(i, j+2), P(i-2, j+2), P(i+2, j), P(i+2, j-2),* and *P(i+2, j+2)* are the amounts of power change of the corresponding first sub-zones 14a, respectively;
*θ*₁, *θ*₂, *θ*₃, and *θ*₄ are weights of the corresponding four first sub-zones 14a, respectively, here *θ*₁+ *θ*₂+ *θ*₃+ *θ*₄=1, and *θ*₁= *θ*₂= *θ*₃= *θ*₄ are satisfied.

In the embodiment of the present application, the amount of power change of each third sub-zone 14c is the weighted average value of the amounts of power change of the corresponding four first sub-zones 14a, so that the amount of power change of the third sub-zone 14c is less than the maximum value of the amounts of power change of the corresponding four first sub-zones 14a, and is greater than the minimum value of the amounts of power change of the corresponding four first sub-zones 14a. As such, the amounts of power change in the third variable power zone 14 can be changed uniformly and smoothly from the first sub-zone 14a to the third sub-zone 14c, so that the lens 1 can effectively produce a focal power change effect more complying with the human eye in front of the human retina.

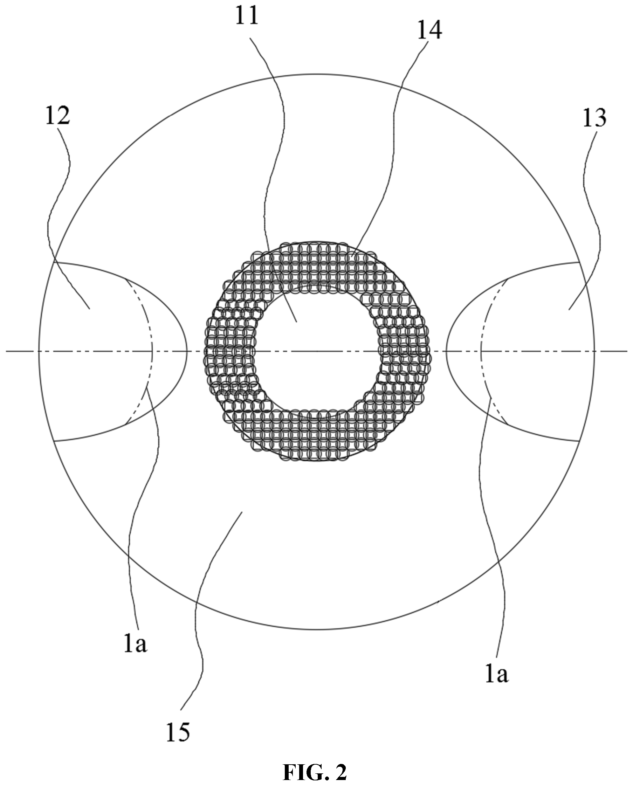

In one embodiment, referring to FIGS. 1 and 2, a circle having a center coinciding with the center of the fixed power zone 11 and being located in the third variable power zone 14 is an iso-power circle, and amounts of power change of the first sub-zones 14a on the iso-power circle are equal.

In the embodiment of the present application, with the change of the radius of the iso-power circle, the amounts of power change of the first sub-zones 14a on the iso-power circle in the third variable power zone 14 can also be uniformly and smoothly changed accordingly, so that the lens 1 meets the change rule of the amount of power change required by the human eye, which is beneficial to improving the matching degree between the lens 1 and the biological characteristics of the human eye, and thus the lens 1 can effectively produce a focal power change effect more in line with the human eye in front of the human retina.

In one embodiment, referring to FIGS. 1 and 2, the lens 1 further includes a transition zone 15 surrounding an outer side of the third variable power zone 14, the first variable power zone 12 and the second variable power zone 13 are both located on sides of the transition zone 15 away from the fixed power zone 11, and the change of an amount of power change of the transition zone 15 along a straight line direction where the reference line is located is calculated by a convolutional smoothing algorithm.

In the embodiment of the present application, the change of the amount of power change of the transition zone 15 along the straight line direction where the reference line is located is calculated by the convolution smoothing algorithm, so that the change of the amounts of power change of the transition zone 15 of the lens 1 is more uniform and smooth. As such, the lens 1 can meet the change rule of the amount of power change required by the human eye, which is beneficial to improving the matching degree between the lens 1 and the biological characteristics of the human eye, and thus the lens 1 can effectively produce a focal power change effect more in line with the human eye in front of the human retina.

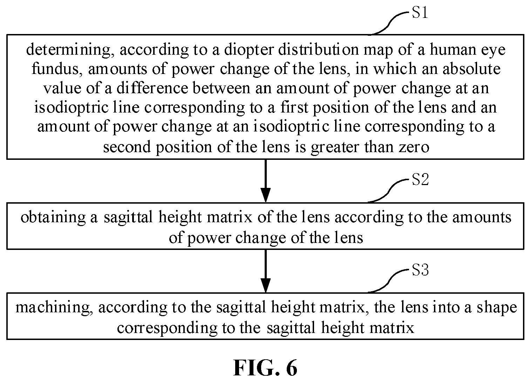

In another aspect, embodiments of the present application provide a method for machining a lens 1. Please refer to FIG. 6, the method may include the following operations.

In S1, amounts of power change of the lens 1 are determined according to a diopter distribution map of a human eye fundus, in which an absolute value of a difference between an amount of power change at an iso-power line 1a corresponding to a first position of the lens 1 and an amount of power change at an iso-power line 1a corresponding to a second position of the lens 1 is greater than zero.

In S2, a sagittal height matrix of the lens 1 is obtained according to the amounts of power change of the lens 1.

In S3, the lens 1 is machined, according to the sagittal height matrix, into a shape corresponding to the sagittal height matrix.

The machining method provided by the embodiment of the present application is applicable to the technical field of lens 1. The amount of power change of each of the zones of the lens 1 is determined according to the diopter distribution map of the human eye fundus, so as to obtain the sagittal height matrix of the lens 1, that is, the change rule of the amount of power change of each of the zones on the lens 1. The amount of power change of the lens 1 machined according to the change rule matches the diopter of the human eye fundus, so that the focal power change effect more conforming to the human eye can be effectively formed in front of the human retina.

Hereinafter, a detection method of an embodiment of the present application will be described in detail with reference to specific embodiments.

In S1, amounts of power change of the lens 1 are determined according to a diopter distribution map of the human eye fundus, in which an absolute value of a difference between an amount of power change at an iso-power line 1a corresponding to a first position of the lens 1 and an amount of power change at an iso-power line 1a corresponding to a second position of the lens 1 is greater than zero.

Note that, according to the diopter distribution map of the human eye fundus, the amount of power change required on the temporal side of the human eye is greater than the amount of power change required on the nasal side of the human eye, and a zoom ring appears around the visual center, which makes the lens 1 produce different power change effects in different zones.

In this operation, the amount of power change required for each zone of the lens 1 is calculated according to the diopter distribution map of the human eye fundus so that the amount of power change of each zone on the lens 1 matches the diopter distribution of the human eye fundus. Further, the absolute value of the difference between the amount of power change at the iso-power line 1a corresponding to the first position of the lens 1 and the amount of power change at the iso-power line 1a corresponding to the second position of the lens is greater than zero, so that the lens 1 complies with the characteristic that an amount of power change required for the nasal side of the human eye is different from an amount of power change required for the temporal side of the human eye, and correct parameters for the sagittal height matrix for machining of the lens 1 are acquired.

In S2, a sagittal height matrix of the lens 1 is obtained according to the amounts of power change of the lens 1.

In this operation, a sagittal height matrix for the machining of the lens 1 is calculated from the amounts of power change of individual zones of the lens 1.

In S3, the lens 1 is machined, according to the sagittal height matrix, into a shape corresponding to the sagittal height matrix.

In this operation, by machining the lens 1 according to the sagittal height matrix, it is possible to obtain a lens 1 having a free-form surface shape, so that the lens 1 produces different power change effects in different zones, and in turn, the matching degree between the machined lens 1 and biological characteristics of the human eye is improved.

In the embodiment of the present application, according to biological characteristics of the human eye fundus, amounts of power change required for different zones on the lens 1 are obtained, and then a sagittal height matrix for machining the lens 1 is obtained. The lens 1 is machined according to the sagittal height matrix, so that the matching degree between the machined lens 1 and the biological characteristics of the human eye is high, which is beneficial to the machined lens 1 to produce a power change effect more complying with the human eye in front of the human retina.

In one embodiment, the lens 1 has a third variable power zone 14, which includes a plurality of non-overlap zones, and the plurality of non-overlap zones have amounts of power change that are constant.

The operation that the amounts of power change of the lens 1 are determined according to the diopter distribution map of the human eye fundus, in which the absolute value of the difference between the amount of power change at the iso-power line 1a corresponding to the first position of the lens 1 and the amount of power change at the iso-power line 1a corresponding to the second position of the lens 1 is greater than zero, further includes the following operations.

In S11, the non-overlap zones are arranged in a rectangular array in a manner of overlapping each other, to obtain a two-overlap zone formed by overlapping two non-overlap zones of the non-overlap zones and a four-overlap zone formed by overlapping four non-overlap zones of the non-overlap zones.

In S12, an amount of power change of the two-overlap zone is interpolated to a weighted average value of amounts of power change of corresponding two non-overlap zones of the non-overlap zones.

In S13, an amount of power change of the four-overlap zone is interpolated to a weighted average value of amounts of power change of corresponding four non-overlap zones of the non-overlap zones.

In the embodiment of the present application, a plurality of non-overlap zones are overlapped and arranged in a rectangular array, so that a plurality of two-overlap zones and a plurality of four-overlap zones are generated. An amount of power change of the two-overlap zone is interpolated to a weighted average value of amounts of power change of the corresponding two non-overlap zones and an amount of power change of the four-overlap zone is interpolated to a weighted average value of amounts of power change of the corresponding four non-overlap zones, so that the amounts of power change in the third variable power zone 14 change evenly and smoothly, and then the third variable power zone 14 on the lens 1 can effectively produce a power change effect more complying with the human eye at a corresponding position in front of the human eye retina.

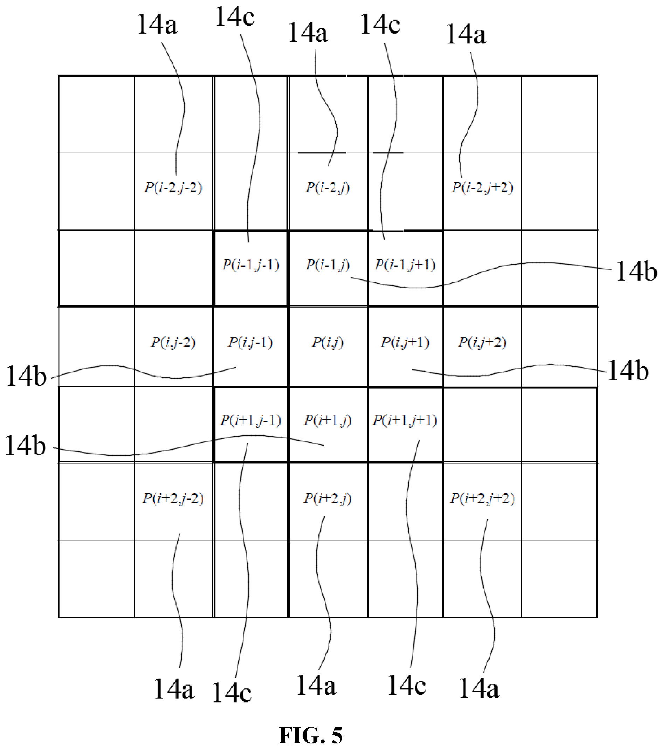

Exemplarily, referring to FIGS. 2 and 5, the two-overlap zone is the second sub-zone 14b and the four-overlap zone is the third sub-zone 14c.

In a third aspect, an embodiment of the present application provides eyeglasses, including: lenses 1 according to the previous embodiment; and a frame in which the lenses 1 are embedded.

In embodiments of the present application, when the user wears the glasses provided by the embodiment of the present application, the glasses can provide a power change effect for the eyes of the user that more complies with biological characteristics of the human eye, which can improve the comfort of the user using it.

The above description only involves preferred embodiments of the present application, and is not intended to limit the present application. Various modifications and changes may be made to the present application for those skilled in the art. Any modification, equivalent substitution, improvement, etc. made within the spirit and principles of the present application shall be included in the scope of protection of the present application.

## Claims

1. A lens comprising a fixed power zone, a first variable power zone and a second variable power zone, wherein the fixed power zone is circular, an amount of power change of the fixed power zone is zero, a straight line coinciding with a center of the fixed power zone is provided as a reference line, the first variable power zone and the second variable power zone are arranged along a direction in which the reference line is located, the first variable power zone is located on a side of the fixed power zone away from the second variable power zone along a radial direction of the fixed power zone, an intersection point of an iso-power line in the first variable power zone and the reference line is provided as a first position, a distance between the first position and the center of the fixed power zone is provided as a target distance, the target distance being further defined by a distance between the center of the fixed power zone and a second position corresponding to a point coinciding with both the second variable power zone and the reference line, and wherein an absolute value of a difference between an amount of power change at the iso-power line corresponding to the first position and an amount of power change at an iso-power line corresponding to the second position is greater than zero.

2. The lens according to claim 1, wherein the first variable power zone is located on a side of the fixed power zone close to a temporal portion, and the second variable power zone is located on a side of the fixed power zone close to a nasal portion, and wherein an amount of power change at the second position is greater than an amount of power change at the first position.

3. The lens according to claim 1, wherein the iso-power line in the first variable power zone is a circular arc line and an iso-power line in the second variable power zone is also a circular arc line.

4. The lens according to claim 3, wherein an intersection point of the reference line and a side of the first variable power zone away from the fixed power zone is provided as a first target point, and a center of circle of the iso-power line in the first variable power zone coincides with the first target point, and wherein an intersection point of the reference line and a side of the second variable power zone away from the fixed power zone is provided as a second target point, and a center of circle of the iso-power line in the second variable power zone coincides with the second target point.

5. The lens according to any one of claims 1 to 4, wherein the lens comprises a third variable power zone surrounding an outer side of the fixed power zone, and located between the first variable power zone and the second variable power zone along the direction in which the reference line is located, the third variable power zone comprising a plurality of first sub-zones, a plurality of second sub-zones and a plurality of third sub-zones, wherein the first sub-zones are distributed in a rectangular array, every two adjacent first sub-zones of the first sub-zones are arranged at intervals, and an amount of power change in each of the first sub-zones is a constant value, wherein each of the second sub-zones is adjacent to corresponding two first sub-zones of the first sub-zones respectively, and each of the second sub-zones has an amount of power change greater than a smaller amount of power change among amounts of power change of the corresponding two first sub-zones, and less than a larger amount of power change among the amounts of power change of the corresponding two first sub-zones, and wherein each of the third sub-zones is adjacent to corresponding four first sub-zones of the first sub-zones respectively, and each of the third sub-zones has an amount of power change greater than the smallest amount of power change among amounts of power change of the corresponding four first sub-zones, and less than the largest amount of power change among the amounts of power change of the corresponding four first sub-zones.

6. The lens according to claim 5, wherein the amount of power change of each of the second sub-zones is a weighted average value of the amounts of power change of the corresponding two first sub-zones.

7. The lens according to claim 5, wherein the amount of power change of each of the third sub-zones is a weighted average value of the amounts of power change of the corresponding four first sub-zones.

8. The lens according to claim 5, wherein a circle located in the third variable power zone and having a center coinciding with the center of the fixed power zone is an iso-power circle, and the first sub-zones on the iso-power circle have amounts of power change that are equal.

9. A method for machining a lens, comprising:
determining amounts of power change of the lens according to a diopter distribution map of a human eye fundus, wherein an absolute value of a difference between an amount of power change at an iso-power line corresponding to a first position of the lens and an amount of power change at an iso-power line corresponding to a second position of the lens is greater than zero;
obtaining a sagittal height matrix of the lens according to the amounts of power change of the lens; and
machining, according to the sagittal height matrix, the lens into a shape corresponding to the sagittal height matrix.

10. The method according to claim 9, wherein the lens comprises a third variable power zone, the third variable power zone having a plurality of non-overlap zones, the plurality of non-overlap zones having amounts of power change that are constant;
wherein determining, according to a diopter distribution map of a human eye fundus, amounts of power change of the lens, wherein an absolute value of a difference between an amount of power change at an iso-power line corresponding to a first position of the lens and an amount of power change at an iso-power line corresponding to a second position of the lens is greater than zero, comprises:
arranging the non-overlap zones in a rectangular array in a manner of overlapping each other, to obtain a two-overlap zone formed by overlapping two non-overlap zones of the non-overlap zones and a four-overlap zone formed by overlapping four non-overlap zones of the non-overlap zones;
interpolating an amount of power change of the two-overlap zone to a weighted average value of amounts of power change of corresponding two non-overlap zones of the non-overlap zones; and
interpolating an amount of power change of the four-overlap zone to a weighted average value of amounts of power change of corresponding four non-overlap zones of the non-overlap zones.

11. Glasses comprising:
lenses according to any one of claims 1 to 8;
a frame in which the lenses are embedded.
